Europäisches Patentamt

European Patent Office

Office européen des brevets

(11) Publication number: **0 078 368**
**B1**

# EUROPEAN PATENT SPECIFICATION

(45) Date of publication of patent specification: **03.02.88**

(21) Application number: **82107220.4**

(22) Date of filing: **10.08.82**

(51) Int. Cl.⁴: **G 11 B 5/84**

(54) Spin coating apparatus and method.

(30) Priority: **02.11.81 US 317369**

(43) Date of publication of application:
**11.05.83 Bulletin 83/19**

(45) Publication of the grant of the patent:
**03.02.88 Bulletin 88/05**

(84) Designated Contracting States:
**DE FR GB IT**

(56) References cited:
**DE-B-2 554 692**
**FR-A-2 295 515**
**US-A-3 198 657**
**US-A-4 201 149**
**US-A-4 244 318**

(73) Proprietor: **International Business Machines Corporation**
**Old Orchard Road**
**Armonk, N.Y. 10504 (US)**

(72) Inventor: **Peugh, Herbert Vincent**
**4127 San Ramon Way**
**San Jose California 95111 (US)**
Inventor: **Ward, Albert Wendell**
**421 Alta Loma Lane**
**Sants Cruz California 95062 (US)**

(74) Representative: **Petersen, Richard Courtenay**
**IBM Svenska AB Patent Operations Box 962**
**S-181 09 Lidingö (SE)**

Courier Press, Leamington Spa, England.

**0 078 368**

**Description**

This invention relates to apparatus for and methods of spin coating liquid magnetic dispersions containing volatile solvent material onto rotating annular substrates. It has a particular, though not exclusive, application to the manufacture of magnetic disks carrying very thin magnetic layers.

Rotating magnetic recording disks are extensively used as memories which allow rapid access to any desired position on a disk. Two important factors relative to such disk memories are the amount of information which can be stored thereon, which is usually described as the recording density and is expressed in bits per cm (inch), and their magnetic properties, which influence the output signals of the magnetic disk. The achievable recording density in turn depends on the thickness of the magnetic coating, and in general, the thinner the coating, the higher the recording density can be.

There is a growing demand for magnetic disks which produce higher and higher recording densities while still retaining an output signal which is suitable for further processing. If these very thin magnetic coatings are used, the heads, which fly on a layer of air which is present between the magnetic disk and the head, have to be brought close to the recording disk. In the case of magnetic disks which have a magnetic layer about 1 μm (micron) thick, the distance between the flying head and the disk surface is so small (the distance being only from 0.2 to 0.6 μm) that the recording surface must be extremely flat.

It has been known in the art for many years to manufacture disk memories by coating an aluminium disk substrate with a liquid dispersion which contains a magnetizable material finely dispersed in a curable binder, subsequently drying and/or curing this coating and, if desired, also buffing and/or polishing it. A coating technique which has proved particularly successful is the spin-coating process, in which the disk substrate is caused to rotate and the coating mixture is allowed to flow onto it, as is described for example in US—A—3,198,657. To achieve a thin magnetic layer, the excess dispersion which has been applied is then spun off.

In the production of magnetic coatings for magnetic disks, a suitable method has proved to be to pour the dispersion which usually contains finely divided magnetic pigments, (e.g. gamma-iron oxide, magnetite or ferromagnetic metal) with particle sizes of from about 0.2 to 1μ, and binders, especially heat-curable binders, such as epoxy resins, phenolic resins, aminoplast precondensates, polyester resins, polyurethanes or polyurethane-forming compounds, or mixtures of such binders with one another or with other binders, such as polycarbonates or vinyl polymers, for example vinyl chloride or vinylidene chloride copolymers, or heat-curable acrylate or methacrylate copolymers. In general, the magnetic dispersions also contain volatile solvents to produce a dispersion which can be poured through a nozzle, for example, tetrahydrofuran, toluene, methyl ethyl ketone and the like, the type of solvent used depending, inter alia, on the binder employed.

After cleaning the base disk substrates with solvent, the magnetic dispersion is poured from a nozzle under slight pressure in the spin-coating process, wherein an excess of the magnetic dispersion is deposited on the rotating disk substrate from the nozzle which can be moved parallel to the disk substrate surface in a radial direction.

During such pouring in one method, the nozzle moves from the inner edge to the outer edge of the disk or preferably from the outer edge to the inner edge and then from the inner edge back to the outer edge. In an alternate embodiment, the nozzle moves radially from the outside diameter toward the inside diameter of the substrate without pouring any dispersion, and pouring does not begin until the nozzle nears the inside diameter of the substrate. Disks produced by such a spin coating process usually have an inherent wedge in the coating thickness, this thickness increasing from the inside diameter (ID) through the middle diameter (MD) to the outside diameter (OD) of the coated disk as a result of the spin coating method.

As indicated above, there is a continuing need for higher performance magnetic recording disks and such higher performance means thinner and thinner magnetic recording layers. To date, the methods used to generate the thinner layers has been to adjust the coating viscosity and solvent balance, spin the disk at increased speed or grind more coating off in the buffing operation. None of these techniques seem to be a viable approach for achieving the thinner disks of the future. Control of the coating wedge has been nearly impossible using the above-mentioned techniques. In the past, this has not been a major problem because the natural wedge of more than 254μm (>10μ″) created during the spin coating operation was approximately what was needed for the finished disk. Future disk requirements may include a flat or near no-wedge recording disk.

It has now been discovered that, by placing an air-flow barrier over a magnetic oxide coated disk during the spin-off portion of the spin coat cycle, the coating thickness can be reduced by 30—50%. It has also been found that this innovation can be used to produce any coating wedge desired.

US—A—4,133,911 and US—A—4,201,149 show apparatus for use in spin coating magnetic disks to reduce the amount of streaking produced in the finished coated disk. This apparatus includes a pair of plate members spaced from the substrate on each side thereof and rotating with the substrate during the spin coating operation. The theory is that the plate members reduce the air flow over the spin coated coating to thereby reduce air flow-induced streaks in the coating.

US—A—4,244,318 shows a spin coating technique for applying ultra-thin magnetic coatings on an aluminium disk. During the spinning a plate is positioned over the disk in order to prevent rapid

2

evaporation of the solvent so that relatively long spinning time can be achieved and the ultra-thin film can be provided.

According to the present invention such a plate (an air barrier) with approximately the same diameter as the substrate being coated is placed closely adjacent to the coated disk during the spin-off cycle and this plate is provided with a radial passage, the shape of this passage being varied to produce the desired coating thickness and profile.

The scope of the invention is defined by the appended claims; and how it can be carried into effect is hereinafter particularly described with reference to the accompanying drawings, in which:—

Figure 1 is a diagrammatic side view of apparatus for carrying out the present invention, while the magnetic coating dispersion is applied thereto;

Figure 2 is a similar side view with the air barrier plate in position during coating spin-off; and

Figure 3 shows a preferred passage in the form of a groove in the air barrier plate.

In a preferred method according to the invention, the as-coated disk coating thickness and the coating wedge and wedge profile on a magnetic oxide coated disk are reduced and controlled, respectively. The method may be called air barrier spin coating. An air barrier controls the coating (ink) viscosity on a disk surface during disk spin-off operation by retarding the coating solvent loss. The retarded solvent loss permits the coating to remain fluid and to flow to a thinner more uniform film than can be achieved using conventional spin coat techniques. The coating wedge and wedge profile (the disk ID-MD-OD coating thickness difference) can also be controlled by the air barrier. The air barrier is a flat stationary plate with a diameter not less than that of the disk being coated, and is positioned closely adjacent to the coated disk during the disk spin-off cycle. Changes in the disk coating thickness, coating wedge, and coating wedge profile are achieved in the following manner when using the air barrier.

The magnetic coating thickness of the disk in the unbuffed state is dependent on coating formulation, coating viscosity and the disk spin-off rpm, whether conventional or air barrier spin coating is used. Air barrier spin coating adds the fourth factor of controlled solvent loss during the disk spin-off cycle. This can reduce the coating thickness up to 30% at the disk ID. This reduction is dependent only on the air barrier being adjacent to the disk being coated and is essentially independent of any air barrier-disk spacing between 0.635mm and 2.54mm (0.025″ and 0.100″). The coating wedge and the disk OD coating thickness is dependent on the air barrier spacing. As the spacing is increased, the coating wedge increases. The normal disk coating wedge on present products is between 0.254µm and 0.431mm (10µ″ and 15µ″) which is not desirable for future products and cannot be controlled using conventional spin coating.

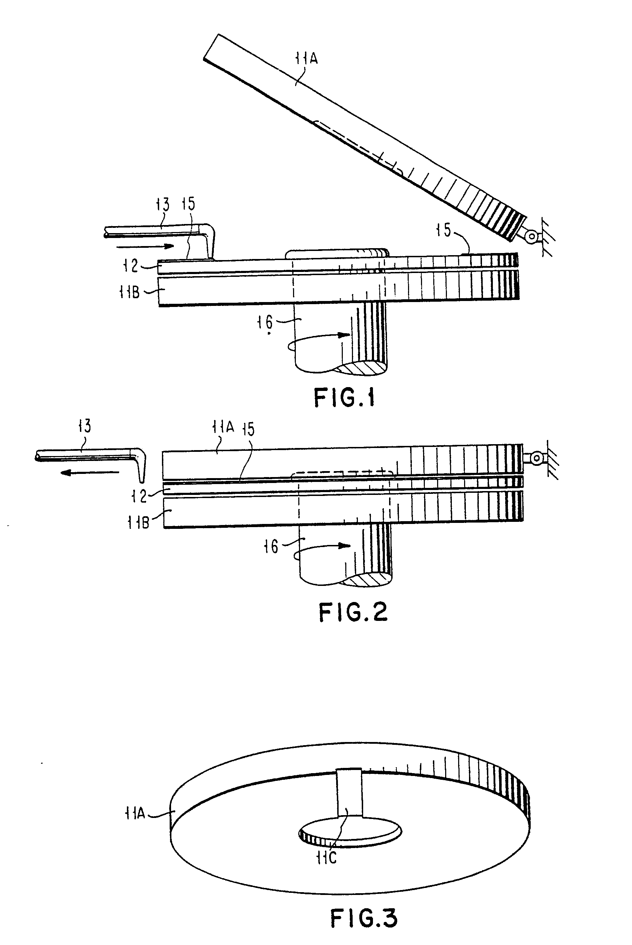

The air barrier employed in practising the present invention may be of any suitable type and preferably is a circular plate having a diameter equal to or greater than that of the substrate to be coated. One particularly effective form for the plate member is shown in Figure 1, in the form of a circular electromagnet which is commonly used to magnetically orient the magnetic particles in a magnetic disk coating which has just been spin coated onto a rotating disk substrate. In operation, an upper portion 11A of the magnetic is hinged so that it can be pivoted away from the disk while a magnetic dispersion is poured onto the substrate from a nozzle or gun 13 which is movable radially of the substrate 12, as is well known in the art. Substrate 12 is rotated by shaft 16 and has a lower portion 11B of the orientation magnet disposed underneath it. As disclosed in US—A—4,001,463, the upper portion 11A of the magnet may be provided with four spaced electromagnet members which, when energized, magnetically cooperate with lower magnet portion 11B to magnetically align the magnetic particles in coating 15 to provide improved recording performance of the resulting magnetic disk.

The magnetic coating formulation employed in practising the present invention may be of any suitable type, such as that disclosed in US Reissue 28,866 and GB—A—1,342,797, or in copending European Patent application No. 82100840.6.

In accordance with the present invention, after nozzle 13 has completed depositing the magnetic coating dispersion on rotating substrate 12 and has withdrawn beyond the outside diameter of the substrate, upper portion 11A of the orienting magnet is quickly lowered to be positioned closely adjacent the coated disk having a layer 15 of the magnetic coating dispersion thereon (Fig. 2). Upper portion 11A forms the air barrier of the present invention and is maintained in a position closely adjacent coating layer 13 during the coating spin-off step of the process.

Coating is performed at coating speed, usually 525 rpm. The speed of rotation may then be reduced to spin-off delay speed, usually 200 rpm, during the 3 to 4 second period while the air barrier member is being brought into position, to minimise solvent evaporation. Then the speed is increased to spin-off speed, usually 3000 to 4000 rpm, to spread the coating and remove excess coating material.

Examples of the effects of different air barrier spacings in accordance with the present invention are listed in Table 1. This table lists coating and wedge thickness for different air barrier-coating spacings at different spin-off delay and spin-off speeds. The magnetic coating composition employed was one in use for spin coating currently produced magnetic disks.

### TABLE 1
#### Coating thickness (µm)—vs—air barrier spacing (mm)

| Air barrier/ substrate spacing | A | B | C | D | E | F |
|---|---|---|---|---|---|---|
| | 0.635 | 1.016 | 1.524 | 2.032 | 2.54 | x̄ (Average) |

Spin-off delay rpm 200—spin-off rpm 4000

| | A | B | C | D | E | F |
|---|---|---|---|---|---|---|
| ID | 655.32 | 683.26 | 701.12 | 693.42 | 734.06 | 695.96 |
| MD | 713.74 | 756.92 | 802.64 | 807.72 | 871.22 | 789.94 |
| OD | 736.6 | 797.56 | 871.22 | 955.04 | 1000.84 | 873.76 |
| Wedge | 81.28 | 114.3 | 160.02 | 261.62 | 271.78 | 177.8 |

Spin-off delay rpm 200—spin-off rpm 3000

| | A | B | C | D | E | F |
|---|---|---|---|---|---|---|
| ID | 820.42 | 850.9 | 822.96 | 817.88 | 855.98 | 833.12 |
| MD | 853.44 | 896.62 | 916.94 | 937.26 | 998.22 | 919.48 |
| OD | 876.3 | 955.04 | 1003.3 | 1071.42 | 1135.38 | 1008.38 |
| Wedge | 55.88 | 104.14 | 180.34 | 256.54 | 279.4 | 175.26 |

Spin-off delay rpm 525—spin-off rpm 4000

| | A | B | C | D | E | F |
|---|---|---|---|---|---|---|
| ID | 777.24 | 812.8 | 795.02 | 807.72 | 820.42 | 802.64 |
| MD | 810.26 | 881.38 | 881.38 | 914.4 | 967.74 | 891.54 |
| OD | 835.66 | 911.86 | 962.66 | 1056.64 | 1132.84 | 980.44 |
| Wedge | 58.42 | 99.06 | 167.64 | 248.92 | 312.42 | 177.8 |

Spin-off delay rpm 525—spin-off rpm 3000

| | A | B | C | D | E | F |
|---|---|---|---|---|---|---|
| ID | 939.8 | 937.26 | 934.72 | 934.72 | 957.58 | 939.8 |
| MD | 957.58 | 1000.76 | 1036.32 | 1054.1 | 1089.66 | 1028.7 |
| OD | 988.06 | 1049.02 | 1120.14 | 1193.8 | 1236.98 | 1117.6 |
| Wedge | 48.26 | 111.76 | 185.42 | 259.8 | 271.78 | 177.8 |

The effects of the different barrier spacings on final coating thickness can be clearly seen from Table 1, the closer barrier spacings producing thinner coatings and smaller wedges.

As a means for direct comparison to what was being accomplished by using an air barrier in spin coating, control disks were made. For each of the five air barrier spacings examined, two control disks were made. This was to ensure that no significant change in the coating composition had taken place. The control disks were coated and then spun-off at 3000 and 4000 rpm, the same as the experimental disks. The barrier spacing and spin-off delay rpm variables were not applicable to the control disks. These control results are listed below in Table 2.

### TABLE 2
#### Coating thickness (micrometers) controls—no air barrier used

| | A | B | C | D | E | F |
|---|---|---|---|---|---|---|
| | | | | | | x̄ (average) |

Spin-off—rpm 4000

| | A | B | C | D | E | F |
|---|---|---|---|---|---|---|
| ID | 1008.38 | 1013.46 | 990.6 | 952.5 | 998.22 | 993.14 |
| MD | 1188.72 | 1209.04 | 1183.64 | 1181.1 | 1158.24 | 1183.64 |
| OD | 1259.84 | 1295.4 | 1257.3 | 1221.74 | 1262.38 | 1259.84 |
| Wedge | 251.46 | 281.94 | 266.7 | 269.24 | 264.16 | 266.7 |

Spin-off—rpm 3000

| | A | B | C | D | E | F |
|---|---|---|---|---|---|---|
| ID | 1112.52 | 1094.74 | 1092.2 | 1092.2 | 1087.12 | 1094.74 |
| MD | 1285.24 | 1285.24 | 1282.7 | 1270 | 1272.54 | 1280.16 |
| OD | 1348.74 | 1391.92 | 1333.5 | 1353.82 | 1376.68 | 1361.44 |
| Wedge | 236.22 | 297.18 | 241.3 | 261.62 | 289.56 | 264.16 |

4

# 0 078 368

The reduction in coating thickness and wedge brought about by the present invention is clearly seen by comparing the figures in Tables 1 and 2.

To report a coating wedge as the difference in coating thickness between the disk ID and the disk OD is incomplete. That tells nothing of the wedge profile, the area between the disk ID and OD. The current disk spin-coat process produces a wedge of about 304.8µm (12µ"). However, such coatings exhibit a sharp coating thickness increase from the disk ID to the MD, then a levelling off from the MD to the OD. The air barrier of the invention provides control for not only the disk ID—OD coating thickness but for the coating wedge profile as well. By means of a groove cut in the face of the air barrier which becomes a tunnel when the air barrier is in position over the coated disk, the coating wedge profile can be controlled. The size and shape of this groove or tunnel determines to a large degree the coating wedge profile.

Figure 3 illustrates an air barrier with such a groove therein. The air barrier may again be upper portion 11A of an orientation magnet and is provided with a groove or tunnel 11C extending radially to allow communication of air between the OD and the ID of magnet portion 11A and hence allow air communication with the disk coating during spin-off. It has been found that a particularly effective groove or tunnel in an air barrier member having a diameter of approximately 355.6mm (14 inches) is a uniform groove 38.1mm (1.5 inches) wide and 2.54mm (0.1 inches) deep, as shown.

Whilst the air barrier has been thus far described with a flat annular surface, the wedge may be controlled by providing a slightly conical or disked surface, as will be appreciated from Table 1.

## Claims

1. Apparatus for use in spin coating a liquid magnetic dispersion containing volatile solvent material onto a rotating annular substrate (12) to form a magnetic coating (15) on the substrate, including drive means (16, 11B) for rotating the substrate as the liquid dispersion is applied thereto and a stationary air barrier plate (11A) positioned closely adjacent the substrate after application of the liquid dispersion thereto, the air barrier plate serving to reduce evaporation of the volatile solvent material, thereby to permit the dispersion to flow more readily over the substrate to form a thinner magnetic coating, characterized by said barrier air plate (11A) having a passage (11C) extending radially between the inner and outer portions of the plate to allow air communication with the disk coating therebetween during spin-off.

2. Apparatus according to claim 1, in which the air barrier plate is positioned between 0.635mm (.025 inches) and 2.54mm (0.1 inches) from the coated substrate.

3. Apparatus according to claim 1 or 2, in which the air barrier plate is an annular member having a diameter equal to or greater than the diameter of the substrate and an inner diameter not greater than the inner diameter of the coating.

4. A method of spin coating a liquid magnetic dispersion containing volatile solvent material onto a rotating annular substrate by use of an apparatus according to claims 1—3, comprising the steps of depositing magnetic dispersion on the rotating substrate, decreasing the speed of rotation, positioning the stationary air barrier plate closely adjacent the coated substrate and increasing the speed of rotation during a spin-off step, whereby a reduction of the evaporation of the volatile solvent material is achieved to permit the dispersion to flow more readily over the substrate and thereby form a thinner magnetic coating and a smaller wedge.

## Patentansprüche

1. Apparat zum Aufbringen einer Schicht aus flüssiger magnetischer Dispersion mit leicht flüchtigem Lösungsmaterial auf ein rotierendes kreisförmiges Substrat (12) durch Zentrifugieren, so daß eine Magnetschicht (15) auf dem Substrat gebildet wird, mit Antriebseinrichtungen (16, 11B) zum Rotieren des Substrats während die Dispersionsflüssigkeit darauf aufgebracht wird und mit einer stationären Platte (11A) zum Abhalten von Luft, welche sich dicht neben dem Substrat befindet, nachdem die Dispersionsflüssigkeit auf das Substrat aufgebracht worden ist, wobei die Platte zum Abhalten von Luft das Verdampfen des leicht flüchtigen Lösungsmittels verringert, so daß die Dispersionsflüssigkeit leichter über das Substrat fließen und dadurch eine dünnere Magnetschicht erzielt werden kann, dadurch gekennzeichnet, daß die Platte (11A) zum Abhalten von Luft eine Öffnung (11C) aufweist, welche sich radial zwischen dem inneren und dem äußeren Bereich der Platte erstreckt, so daß dazwischen die Beschichtung der Disk während des Beschichtungsvorgangs mit Luft in Verbindung steht.

2. Apparat nach Anspruch 1, dadurch gekennzeichnet, daß die Platte zum Abhalten von Luft zwischen 0,635mm und 2,54mm von dem aufgebrachten Substrat enfernt ist.

3. Apparat nach Anspruch 1 oder 2, dadurch gekennzeichnet, daß die Platte zum Abhalten von Luft ein rundes Teil ist, dessen Durchmesser gleich oder größer ist als der Durchmesser des Substrats und dessen Innendurchmesser nicht größer ist als der Innendurchmesser der Beschichtung.

4. Verfahren zum Aufbringen einer Schicht aus flüssiger magnetischer Dispersion mit leicht flüchtigem Lösungsmaterial auf ein rotierendes kreisförmiges Substrat mittels eines Apparates nach den Ansprüchen 1—3, gekennzeichnet durch folgende Schritte:

— Aufbringen einer magnetischen Dispersion auf das rotierende Substrat,

— Verringerung der Umdrehungsgeschwindigkeit,

**0 078 368**

— Positionieren der stationären Platte zum Abhalten von Luft dicht neben dem aufgebrachten Substrat, und
— Erhöhung der Umdrehungsgeschwindigkeit während eines Beschichtungsvorgangs,

wodurch die Verdampfung des leicht flüchtigen Lösungsmittels verringert wird, so daß die Dispersionsflüssigkeit leichter über das Substrat fließen kann und eine dünnere Magnetschicht und ein kleinerer Keil gebildet werden.

**Revendications**

1. Appareil destiné à être utilisé dans l'application centrifuge d'une dispersion magnétique liquide contenant un solvant volatil sur un substrat annulaire tournant (12) pour former un revêtement magnétique (15) sur le substrat, comprenant des moyens d'entrainement (16, 11B) pour faire tourner le substrat tandis que la dispersion liquide est appliquée sur celui-ci et une plaque fixe (11A) formant barrière pour l'air disposée dans une position étroitement adjacente au substrat après application de la dispersion de liquide sur celui-ci, la plaque barrière pour l'air servant à réduire l'évaporation du solvant volatil, en permettant ainsi à la dispersion de s'écouler plus aisément sur le substrat pour former un revêtement magnétique plus fin, caractérisé par le fait que cette plaque barrière (11A) pour l'air comporte un passage (11C) s'étendant radialement entre les parties internes et externes de la plaque pour permettre la communication de l'air avec le revêtement du disque entre celles-ci au cours de l'essorage.

2. Appareil selon la revendication 1, dans lequel la plaque barrière pour l'air est disposée à une distance comprise entre 0,635mm et 2,54mm du substrat revêtu.

3. Appareil selon les revendications 1 ou 2, dans lequel la plaque barrière pour l'air est un élément annulaire ayant un diamètre égal ou supérieur au diamètre du substrat et un diamètre intérieur non supérieur au diamètre interne du revêtement.

4. Procédé d'application centrifuge d'une dispersion magnétique liquide contenant un solvant volatil sur un substrat annulaire en utilisant un appareil selon les revendications 1 à 3, comprenant les stades de dépôt d'une dispersion magnétique sur le substrat tournant, de réduction de la vitesse de rotation, de disposition de la plaque fixe formant barrière pour l'air dans une position étroitement adjacente au substrat revêtu et d'augmentation de la vitesse de rotation au cours de stade de l'essorage, grâce à quoi en réalise une réduction de l'évaporation du solvant volatil permettant à la dispersion de s'écouler plus aisément sur le substrat et de former ainsi un revêtement magnétique plus mince et un coin plus faible.

FIG.1

FIG.2

FIG.3